(19) Europäisches Patentamt

European Patent Office

Office européen des brevets

(11) EP 1 232 131 B1

## (12) EUROPEAN PATENT SPECIFICATION

(45) Date of publication and mention
of the grant of the patent:
**28.01.2004 Bulletin 2004/05**

(51) Int Cl.$^7$: **C07B 61/00**, B01J 19/00,
C08F 2/00, G01N 35/00

(21) Application number: **00962661.5**

(22) Date of filing: **14.09.2000**

(86) International application number:
**PCT/GB2000/003532**

(87) International publication number:
**WO 2001/021560 (29.03.2001 Gazette 2001/13)**

(54) **PROCESS AND APPARATUS FOR POLYMERISATION CATALYST DEVELOPMENT**

VERFAHREN UND VORICHTUNG ZUR ENTWICKLUNG VON POLYMERISATIONSKATALYSATOR

PROCEDE ET APPAREIL DESTINES AU DEVELOPPEMENT D'UN CATALYSEUR DE POLYMERISATION

(84) Designated Contracting States:
**AT BE CH CY DE DK ES FI FR GB GR IE IT LI LU MC NL PT SE**

(30) Priority: **17.09.1999 FR 9911852**

(43) Date of publication of application:
**21.08.2002 Bulletin 2002/34**

(73) Proprietors:
• **BP Chemicals Limited**
**London EC2M 7BA (GB)**
• **BP Chemicals S.N.C.**
**Cergy St. Christophe,**
**95866 Cergy Pontoise Cedex (FR)**
Designated Contracting States:
**FR**

(72) Inventor: **LOPEZ, Norbert**
**F-13500 Martigues (FR)**

(74) Representative: **Preece, Michael et al**
**BP International Limited**
**Group Patents & Agreements,**
**Chertsey Road**
**Sunbury-on-Thames, Middlesex, TW16 7LN (GB)**

(56) References cited:
• **DUC S ET AL: "Investigations of the thermodegradation of ethylene-alpha-olefin copolymers by pyrolysis-gas chromatography (Py-GC)" , POLYMER,GB,ELSEVIER SCIENCE PUBLISHERS B.V, VOL. 40, NR. 24, PAGE(S) 6723-6728 XP004177307 ISSN: 0032-3861 The entire doct.**

• **DATABASE COMPENDEX [Online] ENGINEERING INFORMATION, INC., NEW YORK, NY, US; OHTANI HAJIME ET AL: "Pyrolysis-gas chromatographic study of end groups in poly(methyl methacrylate) radically polymerized in toluene solution with benzoyl peroxide as initiator" Database accession no. EIX89070915829 XP002151563 & PROCEEDINGS OF THE 8TH INTERNATIONAL SYMPOSIUM ON ANALYTICAL AND APPLIED PYROLYSIS;LUND, SWITZ JUN 13-17 1988, vol. 15, 13 June 1988 (1988-06-13), pages 167-174, J Anal Appl Pyrolysis Mar 1989**

• **PETIT A ET AL: "POLYMERISATION RADICALAIRE DU PENTADIENE-1,3. \IV. DETERMINATION DE LA COMPOSITION ET DU RUN NUMBER DES COPOLYMERES DE CIS- OU TRANS-PENTADIENE-1,3 ET D'ACRYLONITRILE PAR PYROLYSE ECLAIR COUPLEE A LA CHROMATOGRAPHIE EN PHASE GAZEUSE*" , JOURNAL OF APPLIED POLYMER SCIENCE,US,JOHN WILEY AND SONS INC. NEW YORK, VOL. 41, NR. 1 / 02, PAGE(S) 267-299 XP000216579 ISSN: 0021-8995 page 297**

• **VAN DER HAGE E R E ET AL: "On-line Curie-point pyrolysis-high-performance liquid chromatographic-mass spectrometric analysis of lignin polymers" , JOURNAL OF CHROMATOGRAPHY A,NL,ELSEVIER SCIENCE, VOL. 736, NR. 1, PAGE(S) 61-75 XP004039045 ISSN: 0021-9673 page 61-62**

**EP 1 232 131 B1**

**Description**

The field of the present invention is research and development, in particular the development of polymerization catalysts. More specifically, it extends from the synthesis of the polymerization catalysts to the analysis of the polymers, passing through their manufacture from the said catalysts.

The present invention relates to a process and to a device for developing polymerization catalysts by directly evaluating the properties of the polymers manufactured from the said catalysts. The present invention makes it possible to rapidly explore a large number of development routes by a systematic approach to the synthesis of the said catalysts, to their uses in the manufacture of polymers and to the method of analysis of the said polymers.

The development of polymerization catalysts is a laborious process which consists in synthesizing a large number of potentially catalytic components and in subsequently selecting according to the catalytic activity.

This process, which has been used for a long time, has resulted in the creation of a large number of polymerization catalysts. Also, the advancement in and the miniaturization of robotic techniques make it possible to automate the synthesis of catalysts in order to treat a greater number of samples in a minimum time. New tools are therefore employed in order to allow the development of novel catalysts in a more efficient, economic and systematic way.

Patent Application WO 98/03521 discloses a combinatorial synthesis method for the selection and characterization of a group of polymerization catalysts, the said selection being carried out according to characteristics specific to the catalysts. Although this method exhibits obvious improvements in terms of efficiency, of reproducibility and of speed, it does not, however, make it possible to easily evaluate the properties and the performance of the targeted final polymer.

The properties directly measured on a polymerization catalyst only allow a first evaluation of the performance of the catalyst and of the resulting polymer. A catalyst which is only selected according to its intrinsic properties is not necessarily suited to all polymerization conditions. In order to perform a better evaluation of the polymerization catalysts, it is important to take into account the polymerization conditions and to directly measure the properties of the polymer resulting from the polymerization in the presence of the said catalysts.

On the one hand, taking into account the polymerization conditions necessarily involves having to carry out polymerizations from a selection of catalysts. The use of catalysts in laboratory polymerization reactors is very often a lengthy and tedious process.

On the other hand, in order to carry out the evaluation of the essential properties of the polymers resulting from the polymerization in the presence of the above mentioned catalysts, it is necessary to resort to a number of analytical means. These means generally only allow a partial characterization and their use is subject to various restrictions. These restrictions may be related to the amount of sample of polymer, to their preparation and to the duration of the analysis.

These restrictions, related, on the one hand, to the use of the catalysts in laboratory reactors and, on the other hand, to the evaluation of the essential properties of the polymers resulting from the polymerization in the presence of the said catalysts, very often result in prohibitory catalytic research costs.

It has been found, in the context of the present invention, to combine the combinatorial synthesis technique with a combinatorial polymerization, allowing the use not only of different catalysts but also of different polymerization conditions. Such a process can only be advantageous if it is used in combination with a means of characterization which can, on the one hand, be automated without penalizing the rate of production of the polymer samples treated and, on the other hand, can make possible the calculation of essential properties of the polymer.

The subject-matter of the present invention is a process for selecting at least one combination among the possible combinations from a group of polymerization catalysts and from a group of sets of polymerization conditions according to the targeted values of one or more properties Pi of the resulting polymers, which process is characterized in that, for each combination, each polymer is subjected to analysis by gas chromatographic pyrolysis and, from the results of the analysis, at least one property Pi of the polymer is evaluated by virtue of correlations drawn up beforehand between the property or properties Pi of the polymers and the results of the analysis of the said polymer by gas chromatographic pyrolysis, and in that the combination or combinations corresponding to the desired value of the property or properties Pi is/are selected.

The process comprises, for example, the following stages :

    i) synthetizing a group of polymerization catalysts,
    ii) manufacturing a group of polymers by combination from the group of polymerization catalysts and from the group of the sets of polymerization conditions,
    iii) isolating a portion or all of each polymer,
    iv) analysing the said polymers by gas chromatographic pyrolysis, comprising: thermal decomposition of the polymers, passing the resulting pyrolysis gases into one or more gas chromatography columns and digital acquisition of the pyrograms,

v) evaluating, from the pyrograms, at least one property Pi of the polymer by virtue of correlations drawn up beforehand between the property or properties Pi of the polymers and pyrograms of the said polymers, and

vi) selecting at least one combination among the combinations prepared from the group of the polymerization catalysts and from the group of the sets of polymerization conditions, by comparison of the properties Pi with their targeted values.

According to the present invention, the term "polymerization catalyst" is understood to mean any catalyst having one or more catalytic components, comprising, for example, a catalyst in combination with a cocatalyst, capable of polymerizing a monomer or copolymerizing a monomer with at least one comonomer. The catalyst can take part in both homogeneous polymerization catalysis and of heterogeneous polymerization catalysis. Thus, the catalyst can be employed in the solid or liquid form or in solution in the polymerization medium. It can be used as is or supported on a solid, such as a metal oxide or a refractory oxide. It can also be used in the form of a prepolymer, that is to say of a catalyst which has been subjected to a preliminary stage of polymerization of one or more monomers which are identical to or different from that of the subsequent main polymerization.

The catalyst can be a compound which generates free radicals, such as a peroxide, a hydroperoxide or a persalt, in particular an organic version, or an azo compound, for example benzoyl peroxide, dicumyl peroxide, chlorobenzoyl peroxide, tert-butyl perbenzoate, lauroyl peroxide or azobisisobutyronitrile, or sodium or potassium persulphate. Such a catalyst takes part in a radical polymerization, such as, for example, an alkene polymerization, such as ethylene, or a vinyl polymerization, such as a polymerization of vinyl chloride or of an acrylic ester or of acrylonitrile or of an aromatic vinyl compound, for example styrene or $\alpha$-methylstyrene.

The catalyst can be a cationic catalyst, for example formed by the addition of an acid compound to an alkene. The acid compound can be sulphuric acid, hydrofluoric acid, aluminium chloride or boron trifluoride, in particular a catalyst of Friedel-Crafts type. The alkene can carry an electron-donating group, so that the intermediate cation formed is sufficiently stable to allow the polymerization to progress. Such a catalyst is involved, for example, in the polymerization of isobutene.

The catalyst can also be an anionic catalyst, for example a powerful nucleophilic reagent, which, for example added to an alkene, gives a carbanion. An anionic catalyst can be an organometallic compound, such as n-butyllithium. Such a catalyst is involved, for example, in the polymerization of isoprene.

The catalyst can also be a catalyst of Ziegler-Natta type comprising a catalyst proper, based on a transition metal, such as a halide of a transition metal, for example a titanium or vanadium or zirconium chloride, in combination with a cocatalyst, such as an organometallic compound, for example an organoaluminium.

The catalyst can be in particular a metallocene, especially of a transition metal, such as zirconium, hafnium, titanium or chromium.

The catalyst can also be a chromium oxide compound supported on a refractory oxide which is thermally activated, such as a catalyst of Phillips type. Such a catalyst is involved in the olefin polymerization, such as ethylene or propylene or a butene.

According to the present invention, each component of the group of the polymerization catalysts can be distinguished by its method of synthesis. By way of example, the methods of synthesis can be distinguished by the nature, the amount and the flow rates of the reactants or additives. They can also be distinguished, for example, by the physical parameters of the synthesis, such as the temperature or the pressure. This results in polymerization catalysts which can differ in their compositions, their types (homogeneous or heterogeneous), their forms (solid, liquid, in solution in the polymerization medium, and the like) and their physical, chemical or physicochemical properties. The said catalysts can optionally also differ, inter alia, in the nature and the concentration of the cocatalyst used, the type of support, the type of coating, the presence or absence of a prepolymerization and the degree of progression and the nature of the (co)monomers of the said prepolymerization and the method of activation.

According to the present invention, a group of polymerization catalysts is synthesized. This operation can be carried out by any known laboratory or industrial method. This operation is preferably carried out by combinatorial synthesis methods which make it possible to rapidly manufacture a large number of catalysts by virtue of appropriate automation and miniaturization of the equipment used.

According to the present invention, it is possible to characterize the catalysts obtained by synthesis. This characterization can be carried out by methods chosen from gas chromatography, differential calorimetry, scanning thermal microscopy or any rheological method.

According to the present invention, the term "sets of polymerization conditions" is understood to mean categories of conditions necessary for carrying out a polymerization. The reaction medium, the method of stirring, the reactants, the additives and all the physical quantities which can be controlled within the polymerization reactor can be chosen, for example, in order to constitute a set of polymerization conditions.

The reaction medium can be a liquid phase comprising hydrocarbons, for example a solvent, or else a liquid phase composed of the monomer or the manufactured polymer in the molten state. The reaction medium can also be a gas comprising, for example, the (co)monomers and inert gases. The inert gases can be alkanes, such as pentane, nitrogen or a mixture of nitrogen and alkanes. The method of stirring can be chosen from any known stirring technique. It can be, for example, internal stirring by a mechanical stirrer or external stirring, such as by movement or vibration of the reactors or of the solid structure supporting them, for example ultrasound vibration. It can also be stirring by bubbling or fluidization. The polymerization reactants can be monomers, comonomers or chemical chain-termination compounds. The additives can be any compound which has an impact on the properties of the polymer when it is added during the polymerization, such as chemical activators or crosslinking agents. The physical quantities which can be controlled within the polymerization reactor can be the temperature, the pressure, the concentrations, the composition and the flow rates of the compounds of the reaction medium.

According to the present invention, a group of polymers is manufactured by combination from the group of polymerization catalysts and from the group of the sets of polymerization conditions. The term "combination" is understood to mean bringing a polymerization catalyst into contact with at least one monomer while using a set of polymerization conditions. This operation is preferably carried out by methods which make it possible to rapidly manufacture a large number of polymers by virtue of appropriate automation and miniaturization of the equipment used. The group of catalysts is preferably obtained from a combinatorial synthesis method, which makes it possible to have an automated process comprising, on the one hand, the synthesis of the catalysts and, on the other hand, the manufacture of the polymers.

The number of polymers manufactured can be between unity and the number of the combinations possible from the group of polymerization catalysts and from the group of the sets of polymerization conditions. For example, if the group of polymerization catalysts comprises N separate catalysts and the group of the sets of polymerization conditions comprises M sets, it is possible to carry out N x M combinations, resulting in N x M presumed distinct polymers.

According to a specific case of the present invention, it is possible to combine a single catalyst with a group of sets of polymerization conditions. In the same way, it is possible, according to another specific case of the present invention, to combine a group of catalysts with a single set of polymerization conditions. These two specific cases can constitute preferred forms of the present invention.

The amount of each polymer manufactured can be between 1 mg and 100 g, preferably from 100 mg to 10 g. An excessively large amount of polymer is penalizing in terms of use of the process of the invention, in particular of use of automated equipment allowing rapid treatment of a large number of samples.

A preferred condition of the present invention is the miniaturization of the samples of catalyst and of polymer, in order to rapidly treat a large number of polymers in a minimum time. In order to meet this condition of miniaturization, the manufacture of the polymers can be carried out in microreactors, within which a polymerization catalyst is combined with a set of polymerization conditions by combination from the group of polymerization catalysts with the group of the sets of polymerization conditions.

The micro reactors can be chosen according to the sets of polymerization conditions applied. The possibilities are unlimited but, for obvious reasons of practicality, it is preferable to use identical microreactors. Use may be made, among the types of microreactor, of, for example, tubular glass microreactors equipped with injection devices within which the catalysts are immersed in a solvent. The monomer and optionally the comonomer or comonomers can be injected simultaneously by bubbling into the microreactors using injectors mounted on an appropriate structure. The microreactors can be stirred by mechanical vibrations of the combined structure supporting the microreactors.

The microreactors used should generally meet the conditions imposed by the different polymerizations, such as, for example, the purity of the reactants, the stirring, the pressure and the temperature.

A preferred condition of the present invention is the automation of the process for the manufacture of the polymers. The group of the sets of polymerization conditions is preferably suitable for the process to be automated. It is preferable to choose, for example, a reaction medium which is simple to employ, such as a solvent, in comparison with a gas. Likewise, it is preferable to choose, for example, a method of stirring by vibration of the structure supporting the microreactors, in comparison with a fluidized bed.

Another preferred condition of the present invention is the speed of execution during the manufacture of the polymers. Miniaturization and automation can make it possible to meet this condition. The time for manufacture of the polymers can be between 10 seconds and 15 minutes, preferably between 20 seconds and 10 minutes.

According to the present invention, it is possible to isolate a portion or all of each polymer. In particular, it is possible to withdraw samples of each polymer. This withdrawing can be carried out by any appropriate technical means. The weight of the samples must be sufficient to allow analysis by gas chromatographic pyrolysis. This withdrawing can be carried out, for example, under an atmosphere purified by an inert gas, such as nitrogen or argon.

By way of example, the polymer samples can be withdrawn by deposition on a component which can be, for example, a ferromagnetic component, the said ferromagnetic component also having an essential function described subsequently in the description of the analysis by gas chromatographic pyrolysis. It is possible, in this case, to use a movable structure to which the said components are attached. To carry out the sampling, the said components are immersed in the polymerization microreactors. A fine polymer film, which in the case of this example is in the form of a gel, is deposited on the said components. The latter can subsequently be collected and introduced individually into a pyrolysis chamber by any mechanism, which mechanism is preferably automated, such as a turntable.

According to another form of the present invention, all of each polymer is isolated in the polymerization microreactor where it was manufactured and is transferred into a pyrolysis chamber.

According to yet another form of the present invention, the microreactor is also the pyrolysis chamber.

According to the present invention, the polymer samples are analysed by gas chromatographic pyrolysis.

Analysis by gas chromatographic pyrolysis generally comprises at least one stage of thermal decomposition during which the polymer samples are brought to a temperature which is sufficient to bring about decomposition by cleavage of the molecular chains. This temperature, subsequently known as the pyrolysis temperature, can vary according to the type of polymer analysed. The polymer samples can be subjected to heat treatment during which the temperature varies, with at least one passage above the pyrolysis temperature. According to a preferred form of the present invention, preheating at a temperature below the pyrolysis temperature, that is to say which does not bring about thermal decomposition, can be carried out in order to remove the liquid or gaseous compounds existing in the said samples which might influence the results of the analysis by gas chromatographic pyrolysis. According to another preferred form of the present invention, a temperature beyond the pyrolysis temperature can be applied to the polymer samples with a virtually instantaneous rise in the temperature. The thermal decomposition operation is preferably carried out in a non oxidizing atmosphere, preferably an inert atmosphere, so as to avoid any combustion.

The analysis by gas chromatographic pyrolysis generally also comprises passing the pyrolysis gases into one or more gas chromatography columns. The gas chromatography columns can be different in length and can operate with different flow rates of carrier gases, in order to optimize the compromise between the duration of the analysis and the resolution of the pyrograms. The columns can also be different in nature, such as packed columns or capillary columns with an appropriate stationary phase. The detector of the chromatograph can be adjusted to the nature of the pyrolysis gases. It is possible, for example, to use a mass spectrometer, separately or coupled with gas chromatography. It is possible to use other types of detectors, such as flame ionization detectors (FID) or thermal conductivity cells.

Any technology targeted at reducing the duration of analysis can be employed, such as the "back flush" technique or high pressure fast gas chromatography or GC. It is also possible to employ a hydrogenation stage which makes it possible to simplify the analysis of the pyrograms obtained.

The analysis by gas chromatographic pyrolysis can optionally comprise digital acquisition of the pyrograms. This is preferably carried out with a computer. The said acquisition can make it possible to display the pyrograms for each polymer sample, to carry out digital processing resulting in the interpretation of the said pyrograms and in particular to carry out the selection according to the process of the present invention.

According to the present invention, at least one property Pi of the polymer is evaluated from the pyrograms by virtue of correlations drawn up beforehand between the property or properties Pi of the polymers and pyrograms. A pyrogram can be described as a function of a retention time in a chromatographic column of the constituents of the pyrolysis gases, the amplitude or the surface of which is a function of the amount of the said compounds. A pyrogram is often provided as a curve comprising a succession of peaks, the main parameters of which are principally the distance between each peak and a temporal reference point and the area of the said peaks. From these parameters, it is possible to differentiate the constituents of the pyrolysis gases by their molecular weights and to determine their respective amounts. To identify the constituents of the pyrolysis gases, each pyrogram can be compared with a library of pyrograms corresponding to known compounds which were analysed by conventional analytical means. This method can be employed by a computer in parallel with the digital acquisition of the pyrograms.

It is possible, by analysis by gas chromatographic pyrolysis, to characterize the polymer samples according to their mechanisms of thenmal decomposition. By way of example, the polymer samples can be characterized by intramolecular properties, such as the nature and the amount of comonomer and the number, the length and the distribution of the branchings. This makes it possible, for example, to carry out selections by polyethylene classes.

The approach described in this example can be generalized to quantify one or more properties Pi. This evaluation from the pyrograms of at least one property Pi of the polymer can comprise the following stages:

i) as described above, a prior digital processing in order to identify the constituents of the pyrolysis gases on the pyrograms, by virtue of a library of pyrograms corresponding to known compounds,
ii) as described above, a calculation of the main parameters of the pyrograms, and
iii) the calculation of the properties Pi by virtue of correlations drawn up beforehand between the property or properties Pi of the polymers and the main parameters of the pyrograms. The correlations are drawn up from a databank linking the properties of the polymers and their pyrograms, the said properties having been measured by conventional analytical methods. By virtue of these correlations, it is possible to determine a large number of properties Pi and in particular the properties related to the intramolecular structure of the polymers which generally influence the intermolecular properties.

According to the present invention, a selection is made of at least one combination among the combinations prepared from the group of polymerization catalysts and from the group of the sets of polymerization conditions, by comparison of the calculated properties Pi with their targeted values.

According to the present invention, the properties Pi of the polymer, from which properties the selection is made, are accessible by a gas chromatographic pyrolysis technique. The term "accessible properties" is understood to mean any property Pi which can be determined from a pyrogram such as those that have been described above.

The properties Pi can be chosen from the intra- or intermolecular structural properties and/or the physical properties. The intra- or intermolecular structural properties can be the molecular mass, the distribution of the molecular masses, the nature and the length of the branchings, the distribution of the branchings, the tacticity, the concentration of comonomer(s) and the crystallinity. The physical properties can be the mechanical, optical, rheological, kinetic or flow properties.

The present invention also relates to equipment which allows the process of the invention to be implemented and which comprises the following components:

- optionally a device for the combinatorial synthesis of polymerization catalysts,
- a group of polymerization microreactors and optionally a device for feeding the said microreactors with polymerization catalysts,
- a device for injecting the (co)monomer or (co)monomers and optionally reactants and additives into the said microreactors,
- a device for placing under polymerization conditions,
- one or more pyrolysis chambers comprising at least one heating system, at least one pipe for feeding with inert gas and at least one pipe for discharging the inert and pyrolysis gases, at least one of the said discharge pipes being connected to one or more columns of a gas chromatography device,
- optionally a device for isolating the polymer produced in the microreactors and for transferring the isolated part into the pyrolysis chamber or chambers, and
- a computer connected to at least one gas chromatography device.

According to a preferred form, the equipment of the present invention comprises a device for the combinatorial synthesis of polymerization catalysts. This device can be decoupled from the equipment, which involves the manual transfer of the polymerization catalysts into the microreactors. This device can also be coupled to the equipment according to the invention via an automaton, making it possible to carry out automated transfer of the polymerization catalysts into the microreactors. This device can also form an integral part of the equipment according to the invention, using, for example for the synthesis of polymerization catalysts, the same microreactors subsequently used for the polymerization in the presence of the said catalysts.

According to the present invention, the equipment comprises a group of microreactors. The latter can be, as described above, adjusted to the sets of polymerization conditions and to the catalysts used.

The equipment of the present invention can comprise a device for injecting the (co)monomer(s) and optionally reactants and additives into the said microreactors. By way of example, this device can be a robot arm, at the end of which are mounted injection syringes delivering controlled doses of (co)monomer(s), of reactants and of additives. In the case of this example, the microreactors can be equipped with leaktight membrane(s), allowing injection under purity conditions suited to the process of the present invention.

The equipment of the present invention can comprise a device for placing under polymerization conditions. This device can comprise, for example, a heating and cooling system, a stirring system, a pressurization system and any system allowing use of the sets of polymerization conditions.

The equipment of the present invention can comprise one or more pyrolysis chambers. A pyrolysis chamber can comprise at least one heating system. According to a preferred form of the present invention, the heating system can be a ferromagnetic component which, by high frequency electromagnetic induction, can rise virtually instantaneously to the temperature of the Curie point of the component. The heating temperature is generally a function of the composition of the alloy of the ferromagnetic component. The heating system can comprise an additional heating device for temperatures below the pyrolysis temperature. A pyrolysis chamber can also comprise at least one pipe for feeding with inert gas. The latter can be connected to a store of inert gas and can be equipped with a device allowing the flow rate of the said gas to be controlled. A pyrolysis chamber can also comprise at least one pipe for discharging the inert and pyrolysis gases. At least one of the said discharge pipes can be connected to one or more columns of a gas chromatography device.

Use may be made of an equipment for analysis by Joule-effect pyrolysis which makes possible gradual heating of the sample by temperature increment. Among the equipment of this type, it is possible to choose those sold by CDS Analytical Inc. (USA) under the name "CDS Pyroprobes"®, Models "1000"® and "2000"®. Use is preferably made of an equipment for analysis by Curie-point pyrolysis which makes possible perfect reproducibility and a virtually instantaneous rise in the pyrolysis temperature. Among the equipments of this type, it is possible to choose the one sold by Fischer (Germany) under the trade name Fischer-CSG®.

In a specific case of the present invention, each microreactor can be used as pyrolysis chamber.

The equipment of the present invention can optionally comprise a device for isolating the polymer produced in the microreactors and for transferring the isolated part into the pyrolysis chamber or chambers. According to a preferred form, the said device can be a device for sampling a polymer. By way of example, use may be made of one or more ferromagnetic components as described above which simultaneously act as heating system for the pyrolysis chamber or chambers. A first advantage of the present invention is the speed of the perfecting of novel catalysts by an approach which makes it possible, in a minimum time, to test a large number of combinations of polymerization catalysts and of sets of polymerization conditions and to rapidly know, by virtue of the analysis by gas chromatographic pyrolysis, the properties of the polymer thus produced with a very small amount of sample.

A second advantage lies in the fact that the evaluation of the catalysts performance is carried out directly from the polymer resulting from the combinations of polymerization catalysts and of sets of polymerization conditions.

A third advantage is related to the automation of the process, allowing very good reproducibility of the results.

A fourth advantage is related to the miniaturization of the process, allowing the properties of the resulting polymer to be evaluated on small-sized samples.

A fifth advantage lies in reducing the research costs in the development and the perfecting of the catalysts.

A sixth advantage lies in the systematic approach of the process which makes it possible to more fully cover the various arrangements possible in the combinations of polymerization catalysts and of sets of polymerization conditions.

A seventh advantage, resulting from the preceding advantage, lies in the limitation of the risks taken in extrapolating to an industrial scale.

An eighth advantage lies in the principle of the analysis by gas chromatographic pyrolysis of the process, making it possible, by appropriate modelling, to anticipate the behaviour of the polymer during its conversion to finished items, this being achieved directly during the development and the perfecting of the catalysts.

## Example 1

Impact of the organometallic content in polymerization catalyst and the polymerization temperature on the structural properties of the resulting polyethylene.

The present example was carried out in order to select combinations, from a group of polymerization catalysts having different concentration of tri-n-octylaluminium compound (or TnOA) and from a group of polymerization temperatures, said combinations conferring to the resulting polyethylene differentiated structural properties.

The polymerization catalysts used were of the Ziegler-Natta type based on titanium, supported on magnesium chloride and comprising tri-n-octylaluminium (or TnOA). The group of polymerization catalysts had, in the present example, three different catalysts, each of them having a different molar ratio of the aluminium over the titanium compounds, Al/Ti, of 0.8, 1.2 and 1.5, all the other characteristics being maintained identical.

The polymerization reactions using those catalyst were carried out in identical gas phase reactors, said gas phase comprising by weight 30 % of ethylene, 10 % of hydrogen, 10 % of 1-butene and 50 % of nitrogen by weight. The absolute pressure maintained in the reactors was 0.5 MPa. The butene and hydrogen partial pressure were maintained constant during the whole polymerization. The group of sets of polymerization conditions had four different sets, each of them having a different polymerisation temperature of 65°C, 75°C, 80°C and 90°C, all the other polymerization conditions being maintained identical.

The combinations from the group of three polymerization catalysts having a different TnOA content and from the group of four sets of polymerization conditions having different polymerization temperature resulted in the manufacturing of twelve polyethylene samples that were subjected to an analysis by gas chromatographic pyrolysis under the same conditions, in accordance with the present invention.

The gas chromatographic pyrolysis was carried out using a Curie-point micro-pyrolyser sold by Fischer under the trade name Fischer-CSG®. Each sample was preheated at a temperature of 250°C and submitted to a pyrolysis temperature of 670°C for 15 seconds. The pyrolysis gases were passed into a fused-silica capillary column coated with a film of 0.25 μm of chemically bonded cross linked methylsilicone sold by RESTEK under the name of RTX1®, having a length of 30 m, an internal diameter of 0.25 m using nitrogen as a carrier gas. The gas chromatographic apparatus used was sold by CHROMPACK under the name CHROMPACK-CP-9001® and was equipped with a flame ionization detectors (FID).

The gas chromatographic pyrolysis analysis led to twelve different pyrograms corresponding to the twelve polyethylene samples above mentioned.

The objective was to select combinations of polymerization catalyst and polymerization temperature conferring differentiated properties to the resulting polyethylene. The properties that were taken into account in the present example were:

P1: the concentration of isolated butene unit in the macromolecular chain, and
P2: the concentration by weight of butene.

By virtue of correlations drawn up beforehand between, the properties P1 and P2, and the results of the pyrolysis gas chromatographic analysis, it has been possible to evaluate P1 and P2, for the twelve polyethylene samples from the results of pyrolysis gas chromatographic analysis.

The correlations between P I and P2, and the results of the pyrolysis gas chromatographic analysis were expressed as a function of the pyrogram peak surfaces, Si, having specific retention time, i and j. The correlations that were expressed as following:

$$P1 = \sum_i Ai * Si^{Bi}$$

$$P2 = \sum_j Aj * Sj^{Bj}$$

where Ai, Bi, Aj, and Bj are constants.

The properties P1 and P2 obtained for the twelve polyethylene samples are presented in Tables 1, 2 and 3 corresponding to an Al/Ti molar ratio in the catalyst respectively of 0.8, 1.2 and 1.5.

Table 1

| Polymerization Temperature (°C) Al/Ti=0.8 | 65 | 75 | 80 | 90 |
|---|---|---|---|---|
| P1 (%) | 92.3 | 84.7 | 82.4 | 85.0 |
| P2 (%) | 5.8 | 5.7 | 7.8 | 7.3 |

Table 2

| Polymerization Temperature (°C) Al/Ti=1.2 | 65 | 75 | 80 | 90 |
|---|---|---|---|---|
| P1 (%) | 87.0 | 88.3 | 88.0 | 86.0 |
| P2 (%) | 6.8 | 8.2 | 8.3 | 8.0 |

Table 3

| Polymerization Temperature (°C) Al/Ti=1.5 | 65 | 75 | 80 | 90 |
|---|---|---|---|---|
| P1 (%) | 88.0 | 83.0 | 80.1 | 81.2 |
| P2 (%) | 6.2 | 7.8 | 7.6 | 7.6 |

From the above tables, a selection was made of the combinations between the polymerization catalyst and polymerization temperature conferring the best compromise between a high concentration of isolated butene unit in the macromolecular chain (PI) and a high concentration by weight of butene (P2). It was found that using a polymerization catalyst having a ratio Al/Ti equal to 1.2 at a polymerization temperature of 75°C or 80°C allows to manufacture a polyethylene having the best compromise in term of structural properties, offering in the same time smooth operating conditions, particularly in terms of polymerization temperature.

**Example 2**

Impact of the C4 hydrocarbon feed mixture composition used to manufacture polyisobutene on the structural properties of the said polyisobutene, more particularly on its unsaturated terminations distribution and more specifically on its reactivity.

The present example was achieved to identify the effect of an hydrogenation treatment of the C4 hydrocarbon feed mixture on the polyisobutene reactivity.

The concept of reactivity of a polyisobutene used in this example aims to reflect the reaction yield and the selectivity of the polyisobutene during post chemical treatment (for instance, maleisation). This concept of reactivity was not properly quantified and its evaluation was made by comparison of the unsaturated terminations distribution in the polyisobutene. From experience, it was known that the unsaturated terminations distribution in a polyisobutene was somehow correlated to the surface of pyrogram peaks having specific retention times.

The present example is based on a statistical analysis, and more particularly a factor analysis, on data from a population of polyisobutene samples analysed by pyrolysis gas chromatography, said samples having been produced using the same catalyst and different C4 hydrocarbon feed mixture. Two polyisobutene products known for their good reactivity, referred as target sample, were included into the polyisobutene samples population after having been submitted to the same pyrolysis gas chromatography.

The catalyst system used in the present example was an ethyldichloroaluminium. The weight ratio between the catalyst and the cocatalyst was initially equal to 1.25.

The polymerization reactions were carried out in a boiling liquid reaction phase containing the isobutene from the C4 hydrocarbon feed, the polymer being formed and the catalyst system. The polymerization reactions were carried out at a temperature of 10°C and at an absolute pressure of 0.132 MPa. The only parameter that was varied between was the quality of the C4 hydrocarbon feed mixture, and more specifically whether the C4 hydrocarbon was submited or not to an hydrogenation treatment. Two subpopulations of polyisobutene were manufactured one with hydrogenation treatment, and the other one without any treatment, of the C4 hydrocarbon feed mixture prior to the polymerization reactions.

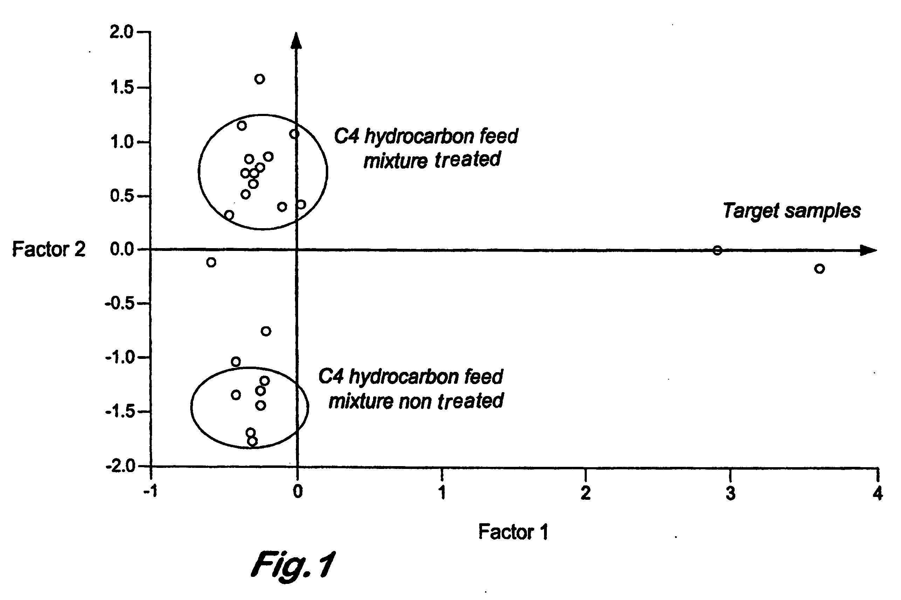

The objective of a factor analysis is to determine how each variable of a given set of variables are related to each other. The set of variables chosen for the present example were the concentrations of n-butene, trans-2-butene, cis-2-butene, 1-butene in the C4 hydrocarbon feed mixture and the surfaces of six different peaks of the resulting pyrograms, each of said peaks having a specific retention time. From the factor analysis it was possible to position the polyisobutene and target samples in a co-ordinate axis system wherein each axis corresponds to one of the factors of the factor analysis as plotted in Figure 1.

From this plot, the sub-population of polyisobutene obtained from a non treated C4 hydrocarbon feed mixture, the sub-population of polyisobutene obtained from a treated C4 hydrocarbon feed mixture and the two target samples were clearly distinctively separated. It appears that both populations A and B are equally far from the target samples which means that no improvement, in terms of reactivity, has to be expected by achieving the hydrogenation treatment of the C4 hydrocarbon feed mixture under these operating conditions.

This conclusion could have been drawn from a very long and costly RMN analysis of the polyethylene samples. This example illustrates the rapidity and flexibility of the process of the present invention.

**Claims**

1. Process for selecting at least one combination among the possible combinations from a group of polymerization catalysts and from a group of sets of polymerization conditions according to the targeted values of one or more properties Pi of the resulting polymers, which process is **characterized in that**, for each combination, each polymer is subjected to analysis by gas chromatographic pyrolysis and, from the results of the analysis, at least one property Pi of the polymer is evaluated by virtue of correlations drawn up beforehand between the property or properties Pi of the polymers and the results of the analysis of the said polymer by gas chromatographic pyrolysis and, **in that** the combination or combinations corresponding to the desired value of the property or properties Pi is/are selected.

2. Process according to Claim 1 **characterized in that** the property Pi of the polymers is chosen from the intra-molecular structural properties and/or the physical properties.

3. Process according to Claim 1 **characterized in that** the property Pi of the polymers is chosen from the physical properties.

4. Process according to any one of Claims 1 to 3, **characterized in that** it comprises the following stages:

    i) synthesizing a group of polymerization catalysts,

ii) manufacturing a group of polymers by combination from the group of polymerization catalysts and from the group of the sets of polymerization conditions,

iii) isolating a portion or all of each polymer,

iv) analysing the said polymers by gas chromatographic pyrolysis, comprising: thermal decomposition of the polymers, passing the resulting pyrolysis gases into one or more gas chromatography columns and digital acquisition of the pyrograms,

v) evaluating, from the pyrograms, at least one property Pi of the polymer by virtue of correlations drawn up beforehand between the property or properties Pi of the polymers and pyrograms of the said polymers, and

vi) selecting at least one combination among the combinations prepared from the group of the polymerization catalysts and from the group of the sets of polymerization conditions, by comparison of the properties Pi with their targeted values.

5. Process according to any one of Claims 1 to 4, **characterized in that** a single catalyst is combined with a group of sets of polymerization conditions.

6. Process according to any one of Claims 1 to 4, **characterized in that** a group of catalysts is combined with a single set of polymerization conditions.

7. Process according to any one of Claims 1 to 6, **characterized in that** the amount of each polymer resulting from the combination can be between 1 mg and 100 g, preferably from 100 mg to 10 g.

8. Equipment comprising the following components:

- a group of polymerization microreaders and optionally a device for feeding the said microreactors with polymerization catalysts,
- a device for injecting the (co)monomer or (co)monomers and optionally reactants and additives into the said microreactors,
- a device for placing under polymerization conditions,
- one or more pyrolysis chambers comprising at least one heating system, at least one pipe for feeding with inert gas and at least one pipe for discharging the inert and pyrolysis gases, at least one of the said discharge pipes being connected to one or more columns of a gas chromatography device, and
- a computer connected to at least one gas chromatography device.

9. Equipment according to Claim 8, **characterized in that** it comprises a device for the combinatorial synthesis of polymerization catalysts.

10. Equipment according to anyone of Claims 8 and 9, **characterized in that** it comprises a device for isolating the polymer produced in the microreactors and for transferring the isolated part into the pyrolysis chamber or chambers.

11. Equipment according to any one of Claims 8 to 10, **characterized in that** the pyrolysis chamber(s) is (are) apparatus(es) for Curie-point pyrolysis.

## Patentansprüche

1. Verfahren zum Auswählen mindestens einer Kombination der möglichen Kombinationen aus einer Gruppe von Polymerisationskatalysatoren und aus einer Gruppe von Sätzen von Polymerisationsbedingungen entsprechend den Zielwerten von ein oder mehreren Eigenschaften Pi der resultierenden Polymere, wobei das Verfahren **dadurch gekennzeichnet ist, dass** für jede Kombination jedes Polymer einer Analyse durch gaschromatographische Pyrolyse unterzogen wird und aus den Ergebnissen der Analyse mindestens eine Eigenschaft Pi des Polymers aufgrund von zuvor aufgestellten Korrelationen zwischen der Eigenschaft oder den Eigenschaften Pi der Polymere und der Ergebnisse der Analyse des Polymers durch gaschromatographische Pyrolyse beurteilt wird, und dadurch dass die Kombination oder Kombinationen entsprechend dem gewünschten Wert der Eigenschaft oder der Eigenschaften Pi ausgewählt wird/werden.

2. Verfahren nach Anspruch 1, **dadurch gekennzeichnet, dass** die Eigenschaft Pi des Polymers aus den intramolekularen strukturellen Eigenschaften und/oder den physikalischen Eigenschaften ausgewählt wird.

3. Verfahren nach Anspruch 1, **dadurch gekennzeichnet, dass** die Eigenschaft Pi des Polymers ausgewählt wird aus den physikalischen Eigenschaften.

4. Verfahren nach irgendeinem der Ansprüche 1 bis 3, **dadurch gekennzeichnet, dass** es die nachfolgenden Schritte umfaßt:

i) Synthetisieren einer Gruppe von Polymerisationskatalysatoren,
ii) Herstellen einer Gruppe von Polymeren durch Kombination aus der Gruppe der Polymerisationskatalysatoren und aus der Gruppe der Sätze von Polymerisationsbedingungen,
iii) Isolieren eines Teils oder alles von jedem Polymer,
iv) Analysieren der Polymere durch gaschromatographische Pyrolyse, umfassend: thermische Zersetzung der Polymere, Führen der resultierenden Pyrolysegase in ein oder mehrere Gaschromatographiesäulen und digitale Erfassung des Pyrogramms,
v) Beurteilung mindestens einer Eigenschaft Pi des Polymers aus den Pyrogrammen aufgrund der zuvor aufgestellten Korrelationen zwischen der Eigenschaft oder den Eigenschaften Pi der Polymere und den Pyrogrammen der Polymere, und
vi) Auswählen mindestens einer Kombination unter den Kombinationen, aufgestellt aus der Gruppe der Polymerisationskatalysatoren und aus der Gruppe der Sätze der Polymerisationsbedingungen, durch Vergleich der Eigenschaften Pi mit ihren Zielwerten.

5. Verfahren nach irgendeinem der Ansprüche 1 bis 4, **dadurch gekennzeichnet, dass** ein einzelner Katalysator mit einer Gruppe von Sätzen von Polymerisationsbedingungen kombiniert wird.

6. Verfahren nach irgendeinem der Ansprüche 1 bis 4, **dadurch gekennzeichnet, dass** eine Gruppe von Katalysatoren mit einem einzelnen Satz von Polymerisationsbedingungen kombiniert wird.

7. Verfahren nach irgendeinem der Ansprüche 1 bis 6, **dadurch gekennzeichnet, dass** die Menge an jedem aus der Kombination resultierenden Polymer zwischen 1 mg und 100 g, bevorzugt 100 mg bis 10 g sein kann.

8. Vorrichtung, umfassend die nachfolgenden Komponenten:

- eine Gruppe von Polymerisationsmikroreaktoren und gegebenenfalls eine Vorrichtung zur Beschickung der Mikroreaktoren mit Polymerisationskatalysatoren,
- eine Vorrichtung zur Injektion des (Co-)Monomers oder der (Co-)Monomeren und gegebenenfalls von Reaktanten und Additiven in die Mikroreaktoren,
- eine Vorrichtung zum Anlegen von Polymerisationsbedingungen,
- eine oder mehrere Pyrolysekammern, umfassend mindestens ein Heizsystem, mindestens eine Leitung zur Beschickung mit Inertgas und mindestens eine Leitung zum Ablassen der Inert- und Pyrolysegase, wobei mindestens eine der Auslaßleitungen mit einer oder mehreren Säulen einer Gaschromatographievorrichtung verbunden ist,
- ein mit mindestens einer Gaschromatographievorrichtung verbundener Computer.

9. Vorrichtung nach Anspruch 8, **dadurch gekennzeichnet, dass** sie eine Vorrichtung für die kombinatorische Synthese von Polymerisationskatalysatoren umfaßt.

10. Vorrichtung nach irgendeinem der Ansprüche 8 und 9, **dadurch gekennzeichnet, dass** sie eine Vorrichtung zur Isolierung des in den Mikroreaktoren erzeugten Polymers und zur Überführung des isolierten Teils in die Pyrolysekammer oder — kammern aufweist.

11. Vorrichtung nach irgendeinem der Ansprüche 8 bis 10, **dadurch gekennzeichnet, dass** die Pyrolysekammer(n) (eine) Vorrichtung(en) für Curiepunktpyrolyse darstellt (darstellen).

**Revendications**

1. Procédé pour sélectionner au moins une combinaison parmi les combinaisons possibles à partir d'un groupe de catalyseurs de polymérisation et d'un groupe d'assortiments de conditions de polymérisation, en fonction des valeurs recherchées d'une ou plusieurs propriétés Pi des polymères produits, lequel procédé est **caractérisé en**

**ce que**, pour chaque combinaison, chaque polymère est soumis à une analyse par pyrolyse en chromatographie gazeuse et, à partir des résultats de l'analyse, au moins une propriété Pi du polymère est évaluée au moyen de corrélations établies au préalable entre la propriété ou les propriétés Pi des polymères et les résultats de l'analyse dudit polymère par pyrolyse en chromatographie gazeuse, et **en ce que** l'on sélectionne la combinaison ou les combinaisons correspondant à la valeur souhaitée de la propriété ou des propriétés Pi.

2. Procédé selon la revendication 1, **caractérisé en ce que** la propriété Pi des polymères est choisie à partir des propriétés structurelles intramoléculaires et/ou des propriétés physiques.

3. Procédé selon la revendication 1, **caractérisé en ce que** la propriété Pi des polymères est choisie à partir des propriétés physiques.

4. Procédé selon l'une l'une quelconque des revendications 1 à 3, **caractérisé en ce qu'**il comprend les étapes suivantes:

   i) synthèse d'un groupe de catalyseurs de polymérisation ;
   ii) fabrication d'un groupe de polymères par combinaison à partir du groupe de catalyseurs de polymérisation et du groupe des assortiments de conditions de polymérisation ;
   iii) isolation d'une partie ou de la totalité de chaque polymère ;
   iv) analyse desdits polymères par pyrolyse en chromatographie gazeuse, comprenant : la décomposition thermique des polymères, le passage des gaz de pyrolyse produits dans une ou plusieurs colonnes de chromatographie gazeuse et l'acquisition numérique des pyrogrammes ;
   v) évaluation, à partir des pyrogrammes, d'au moins une propriété Pi du polymère au moyen de corrélations établies au préalable entre la propriété ou les propriétés Pi des polymères et les pyrogrammes desdits polymères ; et
   vi) sélection d'au moins une combinaison parmi les combinaisons préparées à partir du groupe de catalyseurs de polymérisation et du groupe des assortiments dé conditions de polymérisation, par comparaison des propriétés Pi avec leurs valeurs recherchées.

5. Procédé selon l'une quelconque des revendications 1 à 4, **caractérisé en ce qu'**un seul catalyseur est combiné avec un groupe d'assortiments de conditions de polymérisation.

6. Procédé selon l'une quelconque des revendications 1 à 4, **caractérisé en ce qu'**un groupe de catalyseurs est combiné avec un seul assortiment de conditions de polymérisation.

7. Procédé selon l'une quelconque des revendications 1 à 6, **caractérisé en ce que** la quantité de chaque polymère produit à partir de la combinaison peut être comprise entre 1 mg et 100 g, de préférence entre 100 mg et 10 g.

8. Equipement comprenant les composants suivants :

   • un groupe de microréacteurs de polymérisation et, éventuellement, un dispositif pour alimenter lesdits microréacteurs en catalyseurs de polymérisation ;
   • un dispositif pour injecter le (co)monomère ou les (co)monomères, et éventuellement des réactifs et des additifs dans lesdits microréacteurs ;
   • un dispositif pour la mise en place dans des conditions de polymérisation ;
   • une ou plusieurs chambres de pyrolyse comprenant au moins un système de chauffage, au moins un tube d'alimentation en gaz inerte et au moins un tube d'évacuation du gaz inerte et du gaz de pyrolyse, au moins l'un desdits tubes d'évacuation étant relié à une ou plusieurs colonnes d'un dispositif de chromatographie gazeuse ; et
   • un ordinateur relié à au moins un dispositif de chromatographie gazeuse.

9. Equipement selon la revendication 8, **caractérisé en ce qu'**il comprend un dispositif pour la synthèse combinatoire des catalyseurs de polymérisation.

10. Equipement selon l'une quelconque des revendications 8 ou 9, **caractérisé en ce qu'**il comprend un dispositif pour isoler le polymère produit dans les microréacteurs et pour transférer la partie isolée dans la chambre ou les chambres de pyrolyse.

**11.** Equipement selon l'une quelconque des revendications 8 à 10, **caractérisé en ce que** la chambre ou les chambres de pyrolyse est/sont un appareil ou des appareils de pyrolyse fonctionnant au point de Curie.

**Fig.1**